# EUROPEAN PATENT APPLICATION

(11) **EP 2 579 189 A1**
(43) Date of publication of application: **10.04.2013**
(21) Application number: 11306294.7
(22) Date of filing: 06.10.2011
(51) Int. Cl.: G06N 5/00, G06N 5/04

(54) **Method and apparatus for generating an explanation for a recommendation**

(71) Applicant: Thomson Licensing, 92130 Issy-les-Moulineaux (FR)
(72) Inventor: Lambert, Anne, 35135 Chantepie (FR); Orlac, Izabela, 35160 Breteil (FR); Sirot, Joèl, 35440 Montreuil-sur-Ille (FR)
(74) Representative: Schmidt-Uhlig, Thomas

(57) **Abstract**

A method and an apparatus for generating an explanation for a recommendation based on the content of a recommended item and an item forming the basis for the recommendation are described. The recommended item is compared (21-25) with vertices of a directed graph to associate the recommended item to a first vertex of the graph. Then an item that has been previously accessed by the user is selected (31). This previously accessed item is compared (21-25) with vertices of the directed graph to associate the previously accessed item to a second vertex of the graph. Subsequently a path between the first vertex of the graph and the second vertex of the graph is determined (32) using edges of the graph. Finally, the determined path is provided (33) to the user as an explanation for the recommendation.

## Description

The invention relates to a method and an apparatus for generating an explanation for a recommendation, and more specifically to a method and an apparatus for generating an explanation for a recommendation based on the content of a recommended item and an item forming the basis for the recommendation.

Today recommendation systems are used in several contexts, e.g. e-commerce, VOD (Video On Demand), etc. The purpose of recommendation systems is to guide the user to new items that he might enjoy based on what he has already bought. A state of the art recommendation system can be found, for example, in G. Adomavicius et al.: "Toward the Next Generation of Recommender Systems: A Survey of the State-of-the-Art and Possible Extensions", IEEE Trans. Knowl. Data Eng. Vol. 17 (2005), pp. 734-749. Recommendation systems are usually collaborative. This means that the recommendations for a user are determined based on notes given by other users for the articles. An important advantage of the collaborative filtering approach is that it is not based on machine analyzable content. Therefore, collaborative filtering is capable of recommending complex items, such as movies, without requiring any understanding of the items.

However, as collaborative recommendation systems do not take into account the content of the recommended item they are unable to explain the process that led to the new recommendation in terms of similarities with other items that the user knows. Several studies have shown that users would like to have more information to understand why a specific item is being recommended. For example, the article J. L. Herlocker et al.: "Evaluating collaborative filtering recommender systems", ACM Trans. Inf. Syst. Vol. 22 (2004), pp. 5-53. demonstrates that users welcome explanations based on the similarity with items they already know and appreciated.

It is thus an object of the present invention to propose a solution for generating an explanation for a recommendation.

According to the invention, a method for generating an explanation for a recommendation of an item from a catalog, the recommendation being provided to a user, comprises the steps of:
- comparing the recommended item with vertices of a directed graph to associate the recommended item to a first vertex of the graph;
- selecting an item that has been previously accessed by the user;
- comparing the previously accessed item with vertices of the directed graph to associate the previously accessed item to a second vertex of the graph;
- determining a path between the first vertex of the graph and the second vertex of the graph using edges of the graph; and
- providing the determined path to the user as an explanation for the recommendation.

According to the invention an explanation for a recommendation is generated, which shows how a recommended item is linked to a previously highly rated one. The items, e.g. multimedia content items such as movies, television shows or series, pieces of music, and books, are associated to concepts, e.g. person, places, events, topics, etc., based solely on their content. The concepts themselves are arranged in a directed graph, which represents the relationships between the concepts. For example, Albert Camus is a famous French writer, Paris is the capital of France, etc. By determining a path between the concepts associated to the recommended item and the previously accessed item, respectively, a logical explanation for the recommendation is given. This logical explanation does not necessarily have any relation with the reason why the recommended item has actually been recommended. Generating a semantically valid explanation for a recommendation yields several advantages. It helps to generate a better acceptance of the recommendation system by building trust with the user. It will also increase the probability for the user to buy the recommended item. Finally, it makes unexpected items more acceptable to the user.

Advantageously, the vertices of the graph are derived from concepts of one or more knowledge bases. The edges of the graph are derived from links or cross references within the concepts of the one or more knowledge bases. Knowledge bases that are readily available for this purpose are, for example, the online encyclopedia Wikipedia (http://en.wikipedia.org) or the Internet Movie Database IMDb (http://www.imdb.com). After selecting interesting concepts based on their content, e.g. person, place, event, topic, these are placed as vertices in the directed graph. The internal cross references or hyperlinks found in the knowledge base are used to build edges with an associated context, e.g. in the case of Wikipedia the extract of the article where the link is mentioned. The available knowledge bases allow to easily populate the directed graph with a large number of concepts. At the same time the cross references or hyperlinks inherently represent a useful relationship between the source and the target of the cross reference or the hyperlink.

Preferably, the steps of comparing the recommended item with vertices of the graph and comparing the previously accessed item with vertices of the directed graph are performed using concepts associated to the recommended item and the previously accessed item, respectively. The concepts are advantageously derived from synopses of these items. Alternatively, these steps are performed using metadata associated to the recommended item and the previously accessed item, respectively. These metadata include, for example, the director or the author or the composer of the item, an actress, actor, protagonist or character, or the producer. At least some of the above concepts or metadata will typically be available, so that the comparing steps can generally be performed. Advantageously, an apparatus for generating an explanation for a recommendation of an item from a catalog, the recommendation being provided to a user, is adapted to perform a method as described for generating the explanation.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates a method according to the general idea of the invention,
- Fig. 2: schematically illustrates an apparatus adapted to perform the method of Fig. 1,
- Fig. 3: depicts an exemplary implementation of the generation of a graph;
- Fig. 4: shows the association of items of a catalog with vertices of the graph,
- Fig. 5: illustrates the generation of an explanation for a recommended item based on the vertices of the graph, and
- Fig. 6: shows an example of a graphical explanation for a recommendation.

In the following the invention shall be explained on the basis of a movie recommendation system for a VOD catalog. Of course, the invention is not limited to movie recommendation. The general idea is likewise applicable to other recommendation contexts.

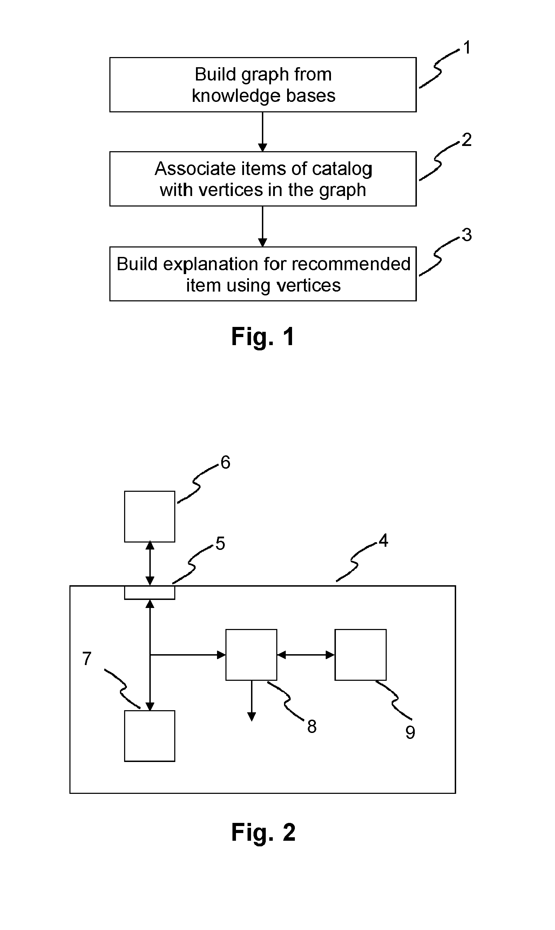

A method for generating an explanation according to the general idea of the invention is schematically depicted in Fig. 1. In a first step 1 a graph is built based on concepts retrieved from a knowledge base. The concepts are selected based on their content, e.g. person, place, event, topic and placed as vertices in a directed graph. Knowledge bases that are readily available for this purpose are, for example, the online encyclopedia Wikipedia (http://en.wikipedia.org) or the Internet Movie Database IMDb (http://www.imdb.com). The internal cross references or hyperlinks found in the knowledge base are used to build edges with an associated context, e.g. in the case of Wikipedia the extract of the article where the link is mentioned. The graph edges are preferably weighted, e.g. based on the popularity of the target vertex. The complete graph is then stored in a memory for future use.

Once the graph is available, the items of the catalog are associated 2 to the vertices of the graph. For this purpose the items of the catalog are compared to the vertices of the graph, using, for example, their associated textual metadata. The comparison is performed until the item matches a concept in the graph. In principle an item may match more than one concept. In this case the concept that is considered to be most relevant is preferably chosen. The resulting associations are then also stored in the memory for future use.

Once the above preliminary steps are finished, explanations for items that are recommended by a recommendation system are built 3 by randomly selecting another item from the catalog that the user appreciated. The recommended item and the selected item are then linked together using a short path algorithm, e.g. Dijkstra's algorithm or an equivalent algorithm.

An apparatus 4 adapted to perform the above described method is schematically depicted in Fig. 2. The apparatus 4 has an interface 5 for retrieving concepts from one or more external knowledge bases 6. Alternatively or in addition, concepts may likewise be retrieved from an internal memory 7. A processor 8 is provided for analyzing the concepts and for generating the necessary vertices and edges of the graph. Advantageously, the memory 7 is used for storing the completed graph. The apparatus further comprises a recommendation system 9 for giving recommendations to user. When a recommendation is given, the processor 8 retrieves a previous item appreciated by the user and generates an explanation for the recommendation based on the graph. This explanation is then displayed to the user. Of course, the processor 8 and the recommendation system 9 may likewise be combined into a single processing block.

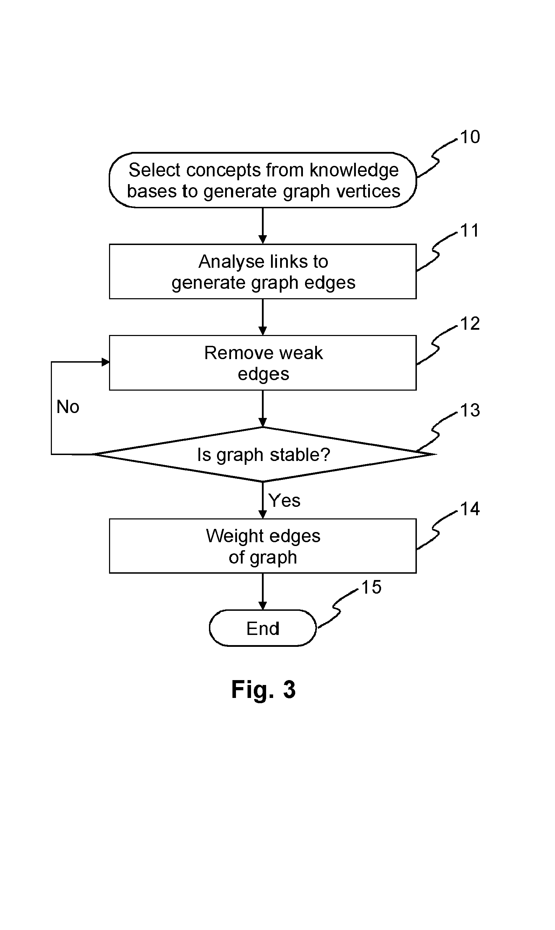

Fig. 3 illustrates the steps that are performed for building a graph. The procedure begins with the selection 10 of concepts from the available knowledge base based on their content, e.g. person, place, event, topic. The selected concepts are used to generate the vertices of the graph. In the next step 11 links or cross references in the selected concepts are analyzed to generate the edges of the graph. In order to associate the edges with a context, the portion of the concept where the link or cross reference is mentioned is extracted. In a further step 12 so-called weak edges are removed. Weak edges are those edges where the source vertex or the target vertex has no IN or OUT edge. It is then checked 13 if the graph is stable, i.e. if any edges have been removed in the previous iteration. If no edges have been removed, the graph is considered stable and the procedure continues with a weighting 14 of the edges. Otherwise the method steps back to the removal 13 of weak edges. The weighting 14 of the edges is preferably done by considering a popularity of the corresponding target vertices. When the weighting 14 of the edges is terminated, the procedure ends 15.

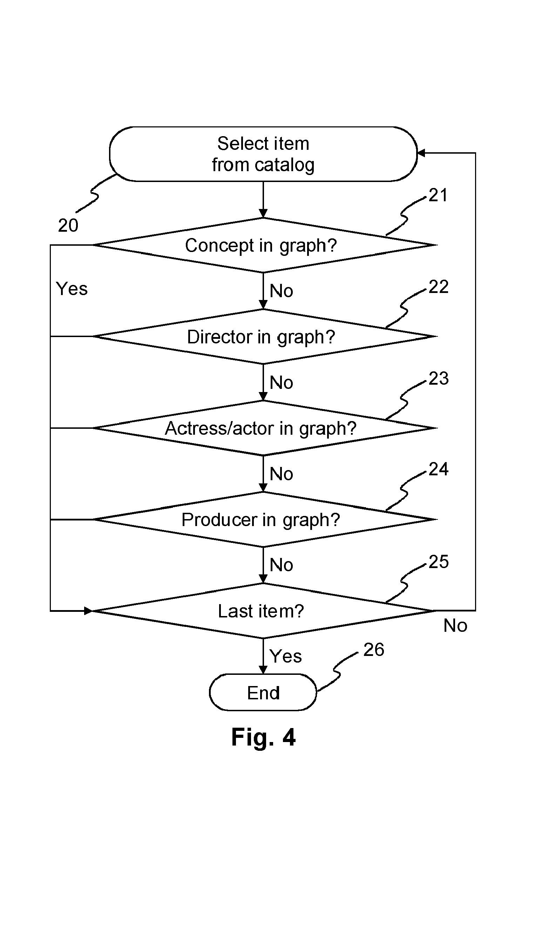

In Fig. 4 the association of items of a catalog with vertices of the graph is shown exemplarily. After selecting 20 an item of the catalog, it is checked 21 whether the synopsis for this item mentions a concept that can be found in the graph. If this is not the case, further searches within the graph for the director 22, an actress or actor 24, and the producer 24 are performed. The searches are preferably performed in the order of their assumed relevance. When a match is found or all searches yielded a negative result, it is determined 25 whether further not yet associated items are available in the catalog. When all items have been checked, the procedure ends 26. If there is no match at all for an item of the catalog, this item is not associated with any vertex of the graph.

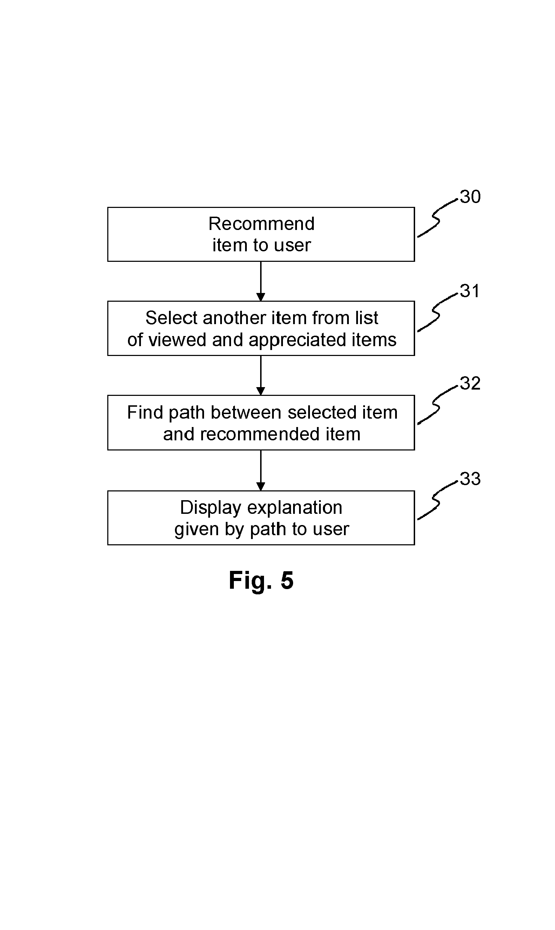

The generation of an explanation for a recommended item based on the vertices of the graph is schematically illustrated in Fig. 5. When a new item is recommended 30 to the user, a further item is selected 31, e.g. from a list of items that the user has watched and appreciated. Then a path between the two items is determined 32 in order to generate an explanation for the recommendation. Finally, the generated explanation is displayed 33 to the user.

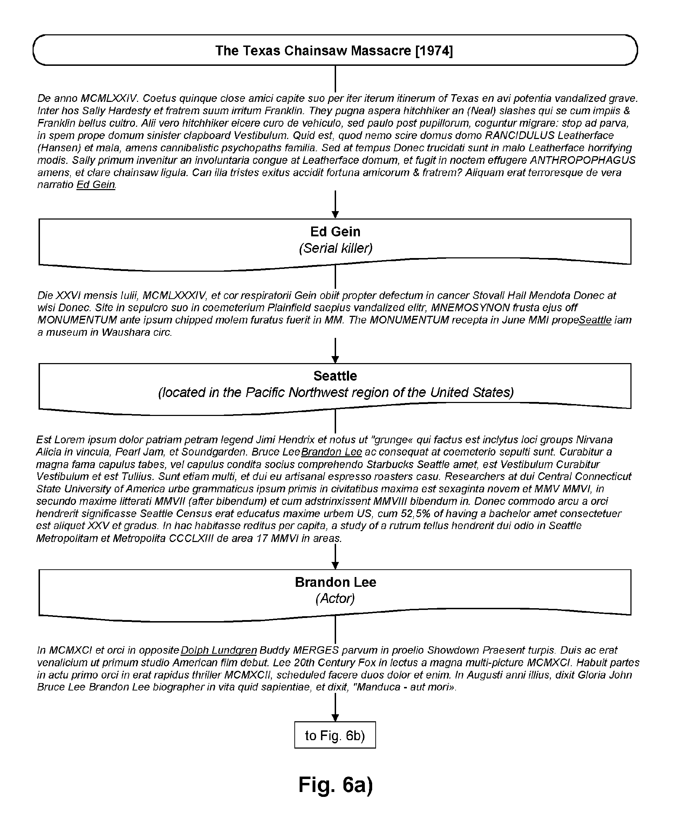

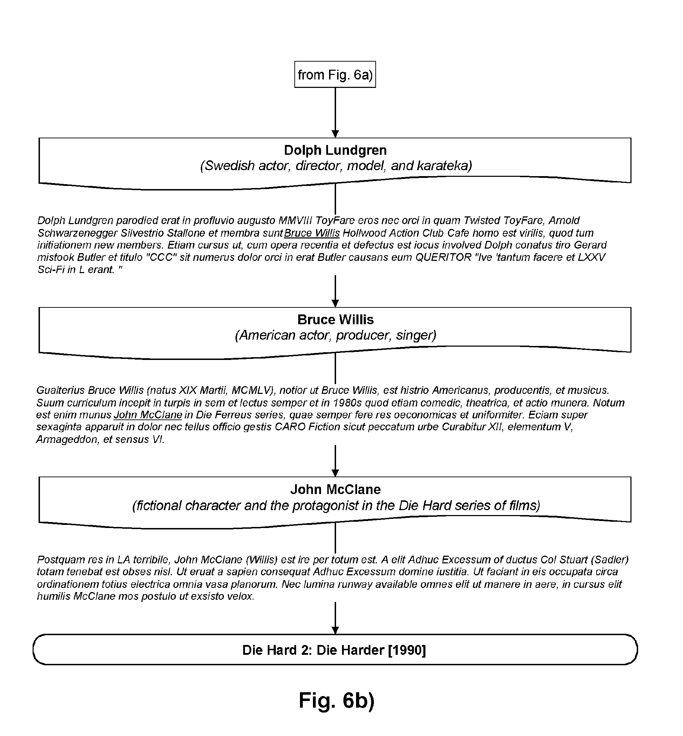

An exemplary explanation for the movie "Die Hard 2" is illustrated in Fig. 6a) and 6b). In these figures, the boxes designate vertices of the graph, whereas the arrows between the boxes are the edges of the graph. The underlined words in each text designate the context associated to the edges. The user has previously appreciated the movie "The Texas Chainsaw Massacre" from 1974. Starting from the latter, the synopsis of this movie is retrieved and analyzed. The synopsis mentions the name "Ed Gein". A database entry for "Ed Gein" points to "Seattle", which in turn contains a link to "Brandon Lee". The entry for "Brandon Lee" mentions "Dolph Lundgren", whose database entry references "Bruce Willis". From "Bruce Willis" a link to "John McClane" is derived, who is mentioned in the synopsis of "Die Hard 2". In this way a logical chain between the two movies is made available.

## Claims

1. A method for generating an explanation for a recommendation of an item from a catalog, the recommendation being provided (30) to a user, the method **comprising** the steps of:
- comparing (21-25) the recommended item with vertices of a directed graph to associate (2) the recommended item to a first vertex of the graph;
- selecting (31) an item that has been previously accessed by the user;
- comparing (21-25) the previously accessed item with vertices of the directed graph to associate (2) the previously accessed item to a second vertex of the graph;
- determining (32) a path between the first vertex of the graph and the second vertex of the graph using edges of the graph; and
- providing (33) the determined path to the user as an explanation for the recommendation.

2. The method according to claim 1, **wherein** the recommended item and the previously accessed item are multimedia content items.

3. The method according to claim 2, **wherein** the multimedia content items are one of movies, television shows or series, pieces of music, and books.

4. The method according to one of the preceding claims, **wherein** the vertices of the graph are derived (10) from concepts of one or more knowledge bases.

5. The method according to claim 4, **wherein** the edges of the graph are derived (11) from links or cross references within the concepts of the one or more knowledge bases.

6. The method according to one of claims 1 to 5, **wherein** the steps of comparing (21-25) the recommended item with vertices of the graph and comparing (21-25) the previously accessed item with vertices of the directed graph are performed using concepts associated to the recommended item and the previously accessed item, respectively.

7. The method according to one of claims 1 to 5, **wherein** the steps of comparing (21-25) the recommended item with vertices of the graph and comparing (21-25) the previously accessed item with vertices of the directed graph are performed using metadata associated to the recommended item and the previously accessed item, respectively.

8. An apparatus (4) for generating an explanation for a recommendation of an item from a catalog, the recommendation being provided to a user, **characterized in that** the apparatus (4) is adapted to perform a method according to one of claim 1 to 7 for generating the explanation.
